# EUROPÄISCHE PATENTSCHRIFT

(11) **EP 0 774 055 B1**
(45) Veröffentlichungstag und Bekanntmachung des Hinweises auf die Patenterteilung: **10.06.1998**
(21) Anmeldenummer: 94903859.0
(22) Anmeldetag: 21.12.1993
(51) Int. Cl.: F01N 3/28

(54) **KATALYSATOR**
CATALYTIC CONVERTER
CATALYSEUR

(30) Priorität: 23.12.1992 DE 4243904
(43) Veröffentlichungstag der Anmeldung: 21.05.1997
(73) Patentinhaber: Heraeus Electro-Nite International N.V., 3530 Houthalen (BE)
(72) Erfinder: Häfele, Edelbert, D-76228 Karlsruhe (DE); Luft, Rudi, D-76593 Loffenau (DE)
(74) Vertreter: Kühn, Hans-Christian
(86) Internationale Anmeldenummer: EP9303650
(87) Internationale Veröffentlichungsnummer: WO9415079

(56) Entgegenhaltungen:
- EP-A- 0 419 906
- DE-A- 4 017 360
- DE-A- 4 110 395
- GB-A- 2 247 413

## Beschreibung

Die Erfindung betrifft einen Katalysator.

Katalysatoren für die Reinigung von Abgas von Verbrennungsmotoren sind in einer Vielzahl von Ausführungsformen bekannt. Sie weisen ein Gehäuse mit einem darin angeordneten keramischen Monolithen auf, dessen Oberfläche mit einer eigentlichen, für die Reinigung des Abgases wirksamen Schicht versehen ist, die nicht nur auf dem Mantel, sondern insbesondere in den parallel zueinander verlaufenden wabenartigen Kanälen angebracht sind.

Diese bekannten Katalysatoren weisen jedoch den Nachteil auf, daß sie beim Kaltstart noch keinerlei Reduktion der Startschadstoffe durch die katalytisch wirksame Schicht bewirken. Das Abgas hat nämlich beim Start eine Temperatur von ca. 100°C. Hiervon wird der Katalysator aufgeheizt und ist erst ab einer Katalysatortemperatur von ca. 300°C funktionsbereit. In der Startphase beim Kaltstart eines Kraftfahrzeuges wird daher noch schädliches Abgas emittiert.

Es sind schon beheizte Katalysatoren auf der Basis eines keramischen Tragkörpers bekannt (DE-OS 41 10 395; US-PS 4 535 589), bei denen aber die Aufbringung der Schichten und deren Kontaktierung außerordentlich aufwendig ist, abgesehen von der praktisch nicht möglichen Qualitätssicherung.

Zur Behebung dieses Nachteils sind sogenannte Startkatalysatoren bekanntgeworden (DE-GM 88 10 816), bei dem nicht ein keramischer Monolith, sondern ein metallischer Träger für die Katalysatorschicht (sogenanntes Metallith) verwendet wird. Dieser Katalysator besteht aus strukturierten Blechen, welche einen Wabenkörper bilden, der eine Vielzahl von zueinander parallelen für das Abgas durchlässigen Strömungskanälen aufweist. Von Vorteil ist hierbei dessen sehr geringe Wärmekapazität. Allerdings reicht die hierdurch bedingte schnellere Aufheizung nicht aus, um die vom Gesetzgeber geforderten niedrigen Schadstoffemissionswerte. zu erreichen. Diesem Vorteil steht grundsätzlich aber der Nachteil gegenüber, daß diese Art von Katalysatoren sehr gut Wärme auch im üblichen Betrieb ableiten und dadurch sehr schnell auskühlen und damit die notwendige Betriebstemperatur bei Betriebsbedingungen mit relativ kaltem Abgas, beispielsweise im Leerlauf unterschritten wird. Üblicherweise wird deshalb der metallische Katalysator durch separat eingelegte, elektrische Heizfolien beheizt und somit die Umgebung des Katalysators, maßgeblich durch Wärmeleitung in der Gasphase erwärmt.

Die direkte elektrische Beheizung von Katalysatorträgerkörpern ist jedoch bisher auf große Schwierigkeiten gestoßen, da die üblichen metallischen Strukturen einen zu geringen elektrischen Widerstand aufweisen, als daß sie mit den bei Kraftfahrzeugen üblichen und vorhandenen elektrischen Spannungen direkt als Heizkörper benutzt werden könnten (DE-PS 563 757). Zum Teil wird in der Technik auch versucht, Katalysatorkörper mittels elektrischer Heizelemente separat zu beheizen (DE-AS 22 30 663). Das gesonderte Heizelement dient jedoch nicht gleichzeitig als Katalysatorträgerkörper.

Aufwendig gestaltete Wabenkörper mit einer systemkonformen elektrischen Versorgung mittels einer 12 V-Spannung zu realisieren, führt nicht zuletzt zu erhöhten Kosten bei der Fertigung (DE-GM 89 05 073). Das beheizte metallische Material weist eine hohe Wärmeleitfähigkeit auf und bedingt somit wiederum einen hohen Leistungsbedarf, da sich die auch segmenthaft aufgebrachte Energie sehr schnell über die Wärmeleitung ausbreitet und dadurch ausgeprägte Temperaturmaxima verhindert werden. Diesem Vorteil steht grundsatzlich aber der Nachteil gegenüber, daß diese Art von Katalysatoren sehr gut Wärme auch im üblichen Betrieb ableiten und dadurch sehr schnell auskühlen und damit die notwendige Betriebstemperatur bei Betriebsbedingungen mit relativ kaltem Abgas, beispielsweise im Leerlauf unterschritten wird.

Die eingangs genannten Katalysatoren sind an sich bekannt (DE-OS 42 30 174) und haben den Erwartungen entsprochen. Sie arbeiten jedoch nicht mit kleinen Leistungen von maximal bis 1500 Watt, sondern machen eine neue Bordelektrik, z.B. fingerdicke Kabel und z.B. eine zweite oder dritte Batterie erforderlich.

Der Erfindung liegt die Aufgabe zugrunde, einen derartigen Katalysator bezüglich der elektrischen Leistung und Wirkung zu verbessern, ohne die Strömungsverhältnisse für das strömende Abgas hierbei zu verschlechtern.

Diese Aufgabe wird durch den Gegenstand des Hauptanspruches erfindungsgemäß gelöst.

Erfindungsgemäß wird also auf die planebene Metallfolie im Bereich ihres elektrischen Anschlusses die katalytisch wirksame Schicht (wash-coat) aufgebracht. Auf diese wird im Siebdruckverfahren in Dickschichttechnik die elektrische Widerstandsheizschicht bzw. die elektrisch leitende Schicht aufgebracht und zwischen der katalytisch wirksamen Schicht und der elektrisch-leitenden Schicht zumindest eine elektrisch nichtleitende weitere Schicht vorgesehen. Durch diese wird sichergestellt, daß im elektrischen Anschlußbereich ein Spannungsdurchschlag zu der Metallfolie nicht geschehen kann, wenn ein Anschlußelement elektrisch gutleitend und fest in Preßkontakt auf die Anschlußringschicht aufgepreßt wird.

In bevorzugter Ausführungsform werden im Bereich des elektrischen Anschlusses mehrere Schichten vorgesehen, was den Vorteil hat, daß die thermischen Ausdehnungskoeffizienten von metallischen und keramischen Schichten, die sehr unterschiedlich sind, schichtweise angenähert werden können. So kann über der Metallfolie, die mit der katalytisch wirksamen Schicht überzogen ist, eine mit Glas- und/oder Keramikteilchen versehene Schicht, nachfolgend Fritte-Schicht genannt, im Bereich des elektrischen Anschlusses vorgesehen werden, die von einer weiteren Extraschicht bedeckt ist. Auf diese Extraschicht kann dann die elektrische Widerstandsheizschicht in an sich bekannter Weise aufgebracht werden.

Mit Vorteil ist die weitere Schicht eine Fritte-Schicht. Die Extraschicht kann bevorzugt als Fritte-Schicht mit eingelagerten Teilchen aus Metall und/oder Metalloxide ausgebildet sein.

In zweckmäßiger Ausführungsform wird die Kontaktierung der mit einer elektrischen Widerstandsheizschicht versehene Metallfolie mittels zweier Anschlußringschichten gebildet, an denen die elektrische Anschlußschichten oder Widerstandsheizschichten enden. Diese auf einem Widerlager aufliegenden Anschlußringschichten sind von einem Anschlußelement sowie dem Widerlager fest umschlossen, wobei das Anschlußelement als elektrisch leitender Kontaktring und das Widerlager als Distanzbuchse ausgebildet sein können. Somit können durch die Unterscheidung des - äußeren - Gehäuses einerseits und des darin angeordneten - inneren - Trägers andererseits, welcher den eigentlichen katalytisch wirksamen Teil bildet, auch vorhandene Katalysatoreinrichtungen nachgerüstet werden, weil eine Veränderung der Kontur und Außenabmessung des äußeren Gehäuses nicht erforderlich ist. Es muß lediglich in dieses der innere Träger als eigentlicher Katalysator eingesetzt werden, wodurch nicht nur die Flexbilität in der Anpassung gewährleistet ist, sondern auch eine Nachrüstung bestehender Katalysatoren möglich ist.

Zweckmäßige Ausgestaltungen und Weiterbildungen der Erfindung sind in den Unteransprüchen gekennzeichnet.

Ein bevorzugtes Ausführungsbeispiel der Erfindung wird nachfolgend unter Bezugnahme auf die Zeichnung näher erläutert. In dieser zeigt:
- Figur 1: den Katalysator, im schematischen Querschnitt;
- Figur 2: eine Metallfolie mit Fig. 1, in Draufsicht;
- Figur 3: einen Querschnitt durch eine mit einer Widerstandsheizschicht versehene Metallfolie.

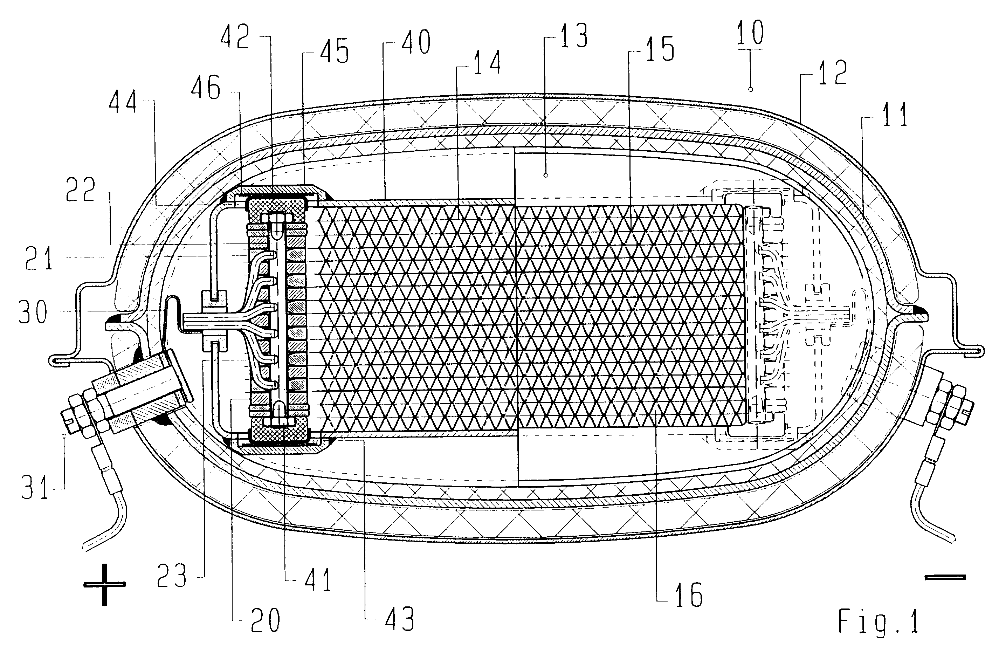

Der Katalysator ist in Fig. 1 insgesamt mit 10 bezeichnet und dient für die Reinigung des Abgases von Verbrennungsmotoren. Er weist ein - inneres Gehäuse 11 und ein äußeres Gehäuse 12 zur vollständigen Kapselung des Katalyators auf. Im Inneren des inneren Gehäuses 11 ist ein insgesamt mit 13 bezeichnete Träger mit dem eigentlichen Katalysator vorgesehen, welches vom Abgas durchströmt wird und mittels beispielsweise eine Quellmatte insgesamt erschütterungsfrei in dem inneren Gehäuse 11 gelagert ist.

Der Träger 13 des eigentlichen Katalysators weist eine Vielzahl von zueinander parallel angeordneten Metallfolien 14 und 15 auf, von welchen je zwei benachbarte jeweils mittels eines gewellten Blechs voneinander beabstandet unter Bildung einer Vielzahl von zueinander parallel zu sich und zur Abgasrichtung verlaufenden Kanälen 16 (vgl. Fig. 1) angeordnet sind. Sowohl die gewellten Bleche und deren Sicken, die senkrecht zur Zeichenebene gemäß Fig. 1 verlaufen, sowie die Metallfolien 14 und 15 sind im Inneren der Kanäle mit einer katalytisch gegenüber dem Abgas wirksamen Schicht versehen, z.B. Aluminiumoxid mit eingelagerten Teilchen aus Platin und/oder Platinmetallen.

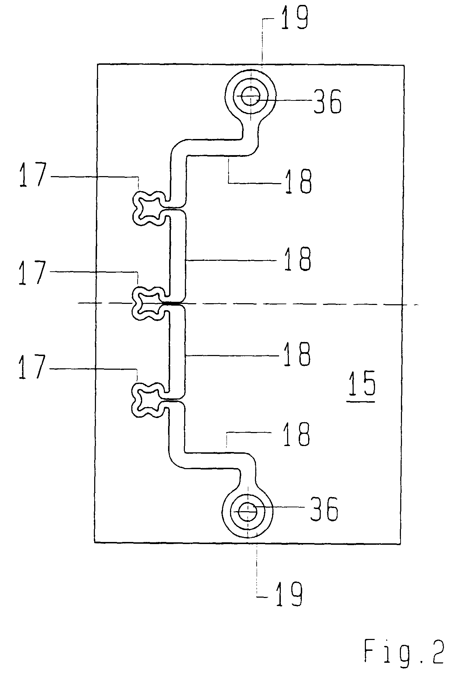

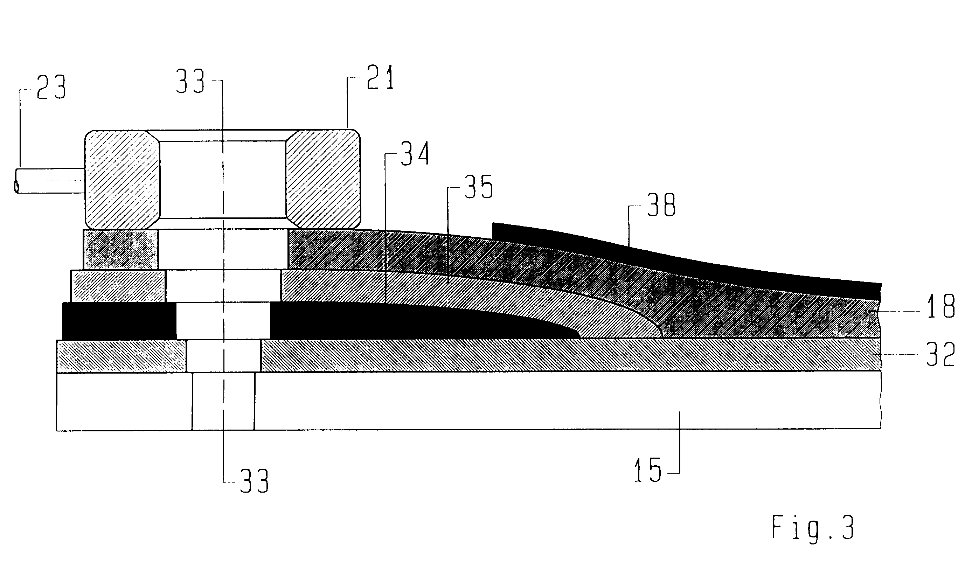

Ferner ist beim wiedergegebenen Ausführungsbeispiel nicht jede, sondern nur ein Teil der Metallfolien 15 mit einer elektrisch leitenden Widerstandsheizschicht 17 (Fig. 2), die ebenfalls vorzugsweise zugleich katalytisch wirksam ausgebildet ist, und im Siebdruckverfahren in Dickschichttechnik auf eine elektrisch isolierende Zwischenschicht, die beim Ausführungsbeispiel zugleich die katalytisch wirksame Schicht ist, aufgebracht. Die anderen Metallfolien 14 ohne die elektrisch wirksame Widerstandsheizschicht 17 sind nur mit der katalytisch wirksamen Schicht 32 (Fig. 3) versehen. Auf dieser Widerstandsheizschicht 17 ist eine weitere katalytisch wirksame Schutzschicht, vorzugsweise als Wash-coat in die katalytisch wirksame Schicht direkt auf der Metallfolie 15 aufgebracht.

Die Widerstandsheizschicht 17 erstreckt sich vorzugsweise nur über eine Teillänge der Metallfolien 15 und ist am abgaseintrittsseitigen Ende derselben angeordnet. Sie ist - in Draufsicht rosettenartig - , über elektrisch gut leitende Anschlußschichten 18 in Hintereinanderschaltung der einzelnen Rosetten der elektrischen Widerstandsheizschicht 17 verbunden und an den seitlichen Bereich der Metallfolie 15 geführt. Die Widerstandsheizschichten können auch omegaförmig, symmetrisch oder unsymmetrisch angeordnet sein, um auch eine ungleichmäßige Wärmeverteilung zu gewährleisten, wodurch beispielsweise unsymmetrischen Anströmungen des Abgases Rechnung getragen werden kann.

Jeweils eine solche, mit einer elektrischen Widerstandsheizschicht 17 versehene Metallfolie 15 liegt mit ihren beiden Anschlußringschichten 19 auf je einem beim wiedergegebenen Ausführungsbeispiel elektrisch isolierenden Widerlager 20 in Form von Distanzbuchsen auf.

Anschlußelement ist hierbei als elektrisch-leitender Kontaktring 21 (Fig. 1) ausgebildet, der fest auf der Anschlußringschicht 19 aufliegt. Ferner ist zur Halterung und Ausrichtung der Metallfolien 15, welche mit einer Widerstandsheizschicht versehen sind, ein Stift 22 vorgesehen, der durch die an diesen Stellen mit Ausnehmungen 36 versehenen Metallfolien 15 durchgreift. Die elektrischen Kontaktringe 21 sind mit einem hochtemperaturstabilen, gutleitenden Anschlußdraht 23 durch Löten, Schweißen oder Verschrauben in an sich bekannter Weise verbunden und mit einem Anschlußelement 30 verbunden, das zu einem elektrischen Anschluß 31 hinausgeführt ist. Es ist aber auch möglich, nur eine Seite der elektrischen Widerstandsheizschicht elektrisch isoliert aus dem inneren Gehä use 11 in an sich bekannter Weise herauszuführen und den anderen Anschluß fest mit Masse anzuschließen, wodurch sich der Anschluß- und Herstellungsaufwand weiter beträchtlich verringert.

Figur 3 zeigt einen schematischen Aufbau. Hiernach ist die Metallfolie 15 mittels einer katalytisch wirksamen Schicht 32 überzogen. Diese ist ferner außerhalb des Anschlußbereichs 33 mit der elektrischen Widerstandsheizschicht 17 bzw. die diese miteinander verbindenden elektrischen Anschlußschichten 18 beschichtet. Zwischen dieser Schicht 18 und der katalytisch wirksamen Schicht 32 ist im Anschlußbereich 33 eine direkt auf der katalytisch wirksamen Schicht 32 aufgebrachte, elektrisch nichtleitende weitere Schicht, vorzugsweise Fritte-Schicht 34 und auf dieser eine Extraschicht 35 vorgesehen, die eine Fritte-Schicht mit eingelagerten metallpartikeln, z.B. Partikelchen aus Platin und/oder Platinmetallen darstellt. Die elektrische Anschlußschicht 18 ist hierbei im elektrischen Anschlußbereich 33 als Anschlußringschicht ausgebildet, auf die zum Zwecke der Kontaktierung elektrisch gut leitend ein Kontaktring 21 angreift, an den die elektrischen Anschlußdrähte 23, beispielsweise durch Löten festgelegt sind. Ferner kann nochmals im Übergangsbereich vom elektrischen Anschlußbereich 33 zu dem restlichen katalytisch wirksamen Bereich der Metallfolie außen eine Schutzschicht 38, vorzugsweise wiederum eine Fritte-Schicht vorgesehen sein.

Der den eigentlichen Katalysator bildende Träger 13 ist innerhalb eines beispielsweise als Rechteck-Profilrohr ausgebildeten Tragkörpers 40 aufgenommen und in diesem zur Vermeidung von durch Wärmeausdehnung der Metallfolien 14, 15 bzw. der übrigen Schichten des Katalysators bedingten Dauerhaltbarkeitsproblemen verschieblich gelagert. Hierzu ist der die elektrischen Kontaktringe 21 durchdringende Stift 22 im Bereich seiner beiden Enden mit je einer Sechskantmutter 41 versehen, die beide in je ein topfförmig gestaltetes Drahtkissen 42 eingreifen. Jedes der Drahtkissen 42 ist innerhalb eines ebenfalls topfförmig ausgestalteten Lagerkörpers 43 aufgenommen, der in eine langlochförmige Öffnung 44 des Tragkörpers 40 ragt und in dieser quer zur Erstreckungsrichtung des Stiftes 22 längsgeführt ist. Die im Tragkörper 40 vorgesehene Öffnung 44 ist durch eine mit diesem abgasdicht verbundene Kappe 45 verschlossen. Zwischen der Außenseite des Lagerkörpers 43 und der Innenseite der Kappe 45 kann hierbei eine als Gleitelement dienende Scheibe 46 angeordnet sein. Zur Vermeidung von durch Längenausgleichbewegungen des Trägers 13 in den elektrischen Anschlußdrähten 23 evtl. entstehenden mechanischen Spannungen kann der diese mit dem elektrischen Anschluß 31 verbindende Anschlußbereich 30 in der aus Fig. 1 ersichtlichen Art als Federbügel ausgebildet sein.

## Patentansprüche

1. Katalysator (10) für die Reinigung von Abgas aus Verbrennungsprozessen, vorzugsweise von Verbrennungsmotoren mit einem Gehäuse (11, 12) und einem darin angeordneten Träger, vorzugsweise mit einer Vielzahl von zueinander parallel verlaufenden, wabenartig ausgebildeten Kanälen (16), wobei der Träger eine katalytisch gegenüber dem Abgas wirksame Schicht, vorzugsweise Wash-coat, z.B. Aluminiumoxid mit eingelagerten Teilchen aus Platin und/oder Platinmetallen aufweist, wobei zumindest ein Teilbereich der Oberfläche des Trägers zumindest eine elektrisch leitende Widerstandsheizschicht (17) und gegebenenfalls eine damit verbundene elektrisch leitende Anschlußschicht (18) trägt, die auf dem Träger aufgebracht ist, wobei der Träger einen metallischen Werkstoff in Form einer Anzahl von voneinander vorzugsweise mittels eines gewellten Blechs unter Bildung der Kanäle beabstandet angeordneter Metallfolien (15) aufweist,
wobei im elektrischen Anschlußbereich (33) zumindest einer der Metallfolien zwischen der katalytisch wirksamen Schicht (32) und entweder der elektrisch leitenden Anschlußschicht (18) oder der elektrisch leitenden Widerstandsheizschicht (17) zumindest eine elektrisch nichtleitende weitere Schicht (34) vorgesehen ist.

2. Katalysator nach Anspruch 1, dadurch gekennzeichnet, daß zumindest die eine die elektrisch leitende Widerstandsheizschicht aufweisende Metallfolie (15) planeben angeordnet ist.

3. Katalysator nach Anspruch 2, dadurch gekennzeichnet, daß die Metallfolien parallel zueinander angeordnet sind und solche mit einer elektrischen Widerstandsheizschicht (17) und solche (14) ohne diese Schicht vorgesehen sind.

4. Katalysator nach einem der Ansprüche 1 bis 3, dadurch gekennzeichnet, daß die weitere Schicht (34) zwischen der katalytisch wirksamen Schicht (32) und einer Extraschicht (35) angeordnet ist.

5. Katalysator nach einem der Ansprüche 1 bis 4, dadurch gekennzeichnet, daß die weitere Schicht (34) eine Teilchen aus Keramik und/oder Glas aufweisende Schicht ist.

6. Katalysator nach einem der Ansprüche 1 bis 5, dadurch gekennzeichnet, daß die Extraschicht (35) als Fritte-Schicht mit eingelagerten Teilchen aus Metall ausgebildet ist.

7. Katalysator nach einem der Ansprüche 4 bis 6, dadurch gekennzeichnet, daß im Anschlußbereich (33) auf der weiteren Schicht (34) und/oder der Extraschicht (35) die Widerstandsheizschicht (17) oder die diese miteinander verbindenden elektrisch leitende Anschlußschicht (18) aufgebracht ist.

8. Katalysator nach Anspruch 7, dadurch gekennzeichnet, daß auf die elektrisch leitende Widerstandsheizschicht (17) eine weitere katalytisch wirksame Schutzschicht (38) aufgebracht ist.

9. Katalysator nach Anspruch 7, dadurch gekennzeichnet, daß die Schutzschicht als Wash-coat, z.B. Aluminiumoxid mit eingelagerten Teilchen aus Platin und/oder Platinmetallen ausgebildet ist und/oder als Fritte-Schicht ausgebildet ist.

10. Katalysator nach einem der Ansprüche 1 bis 9, dadurch gekennzeichnet, daß je zwei zueinander benachbarte Metallfolien (15) von einem gewellten Blech mit ebenfalls katalytisch wirksamer Oberfläche auf Abstand unter Bildung der Vielzahl der Kanäle (16) gehalten sind.

11. Katalysator nach einem der Ansprüche 1 bis 10, dadurch gekennzeichnet, daß die benachbarten Metallfolien (15) planeben und parallel zueinander verlaufend in einem Paket angeordnet sind, wobei die Kanäle (16) sich von der abgaseintrittsseitigen Stirnseite zu der abgasaustrittsseitigen Stirnseite in Strömungsrichtung des Abgases erstrecken.

12. Katalysator nach einem der Ansprüche 1 bis 11, dadurch gekennzeichnet, daß sich die elektrische Widerstandsheizschicht (17) quer zur Strömungsrichtung des Abgases erstreckt.

13. Katalysator nach einem der Ansprüche 1 bis 12, dadurch gekennzeichnet, daß die elektrische Widerstandsheizschicht (17) sich nur über eine Teillänge der Metallfolien (15) erstreckt.

14. Katalysator nach Anspruch 12 oder 13, dadurch gekennzeichnet, daß die elektrische Widerstandsheizschicht (17) im Bereich des abgaseintrittsseitigen Endes der Metallfolie (15) angeordnet ist.

15. Katalysator nach Anspruch 12, 13 oder 14, dadurch gekennzeichnet, daß alle Schichten der Metallfolie mit Ausnahme der katalytisch wirksamen Schicht (32) im Siebdruckverfahren in Dickschichttechnik aufgebracht sind.

16. Katalysator nach Anspruch 12, 13, 14 oder 15, dadurch gekennzeichnet, daß nur ein Teil der Metallfolien (15) mit einer elektrischen Widerstandsheizschicht (17) und/oder einer elektrischen Anschlußschicht (18) versehen und an beiden Seiten mittels je eines Anschlußelementes elektrisch anschließbar sind.

17. Katalysator nach einem der Ansprüche 1 bis 16, dadurch gekennzeichnet, daß die elektrische Widerstandsheizschicht selbst die elektrische Anschlußschicht (18) bildet.

18. Katalysator nach Anspruch 16 oder 17, dadurch gekennzeichnet, daß die mit einer elektrischen Widerstandsheizschicht (17) versehenen Metallfolien (15) einzeln oder gruppenweise elektrisch ansteuerbar sind.

19. Katalysator nach einem der Ansprüche 1 bis 18, dadurch gekennzeichnet, daß die elektrische Widerstandsheizschicht (17) und/oder die elektrischen Anschlußschicht (18) auf der Metallfolie (15) in zwei Anschlußringschichten (19) enden und daß diese in Dickschichttechnik auf der planeben angeordneten Metallfolie (15) angebracht sind.

20. Katalysator nach Anspruch 19, dadurch gekennzeichnet, daß auf den Anschlußringschichten (19) eine zum elektrischen Anschluß dienendes Anschlußelement (21) im Preßkontakt, gegebenenfalls auf der anderen Seite der Metallfolie (15) gestützt auf einem Widerlager (20) aufliegt.

21. Katalysator nach einem der Ansprüche 19 bis 20, dadurch gekennzeichnet, daß jede mit einer elektrischen Widerstandsheizschicht (17) und/oder elektrische Anschlußschicht (18) versehene Metallfolie (15) eine von der Anschlußringschicht (19) umschlossene Ausnehmung (36) aufweist.

22. Katalysator nach Anspruch 21, dadurch gekennzeichnet, daß die Ausnehmung (24) von einem Stift (22) zur Ausrichtung und Halterung durchgriffen ist.

23. Katalysator nach Anspruch 22, dadurch gekennzeichnet, daß das Anschlußelement als von dem Stift (22) durchgriffener, elektrisch leitender Kontaktring (21) ausgebildet ist.

24. Katalysator nach Anspruch 20, dadurch gekennzeichnet, daß jedes Widerlager als Distanzbuchse (20) ausgebildet ist.

25. Katalysator nach Anspruch 23, dadurch gekennzeichnet, daß der elektrisch leitende Kontaktring (21) über einen angelöteten, angeschweißten oder verschraubten Anschlußdraht (23) an eine Spannungsquelle anschließbar ist.

26. Katalysator nach einem der Ansprüche 1 bis 25, dadurch gekennzeichnet, daß der in dem inneren Gehäuse (11) angeordnete Träger (13) mit dem äußeren Gehäuse (12) als Nachrüstsatz ausgebildet ist.

27. Katalysator nach einem der Ansprüche 1 bis 26, dadurch gekennzeichnet, daß der Träger (13) in einem innerhalb des inneren Gehäuses (11) angeordneten Tragkörper (40) angeordnet ist.

28. Katalysator nach einem der Ansprüche 1 bis 27, dadurch gekennzeichnet, daß der Träger (13) mittels eines Schiebelagers im Tragkörper (40) verschieblich gelagert ist.

29. Katalysator nach Anspruch 28, dadurch gekennzeichnet, daß das Schiebelager einen Lagerkörper (43) aufweist, der in eine Öffnung (44) des Tragkörpers (40) ragt und in diesem längsgeführt ist.

30. Katalysator nach Anspruch 29, dadurch gekennzeichnet, daß die Öffnung (44) durch eine mit dem Tragkörper (40) abgasdicht verbundene Kappe (45) verschlossen ist.

31. Katalysator nach Anspruch 29, dadurch gekennzeichnet, daß der Lagerkörper (43) topfförmig ausgebildet ist und einen von einem Drahtkissen (42) gebildeten Einsatz aufweist.

32. Katalysator nach Anspruch 22 oder 31, dadurch gekennzeichnet, daß das Drahtkissen (42) topfförmig ausgebildet ist und die stirnseitigen Enden des Stiftes (22) in das Drahtkissen (42) ragen.

33. Katalysator nach Anspruch 32, dadurch gekennzeichnet, daß der Stift (22) an seinen beiden Enden je eine als Übertragungselement dienende Sechskantmutter trägt.

34. Katalysator nach einem der Ansprüche 1 bis 31, dadurch gekennzeichnet, daß ein elektrischer Anschlußdraht (23) mit einem elektrischen Außenanschluß (31) verbindendes Anschlußelement (30) als Federbügel ausgebildet ist, dessen Federweg sich im wesentlichen quer zur Längsachse des Stiftes (22) erstreckt.

## Claims

1. A catalyst (10) for the cleaning of exhaust gas from combustion processes, preferably of internal combustion engines, with a housing (11, 12) and a support arranged therein, preferably with a plurality of channels (16) running parallel to each other and constructed in the manner of a honeycomb, wherein the support has a layer which is active catalytically with respect to the exhaust gas, preferably wash-coat, e.g. aluminium oxide with embedded particles of platinum and/or platinum metals, wherein at least a partial region of the surface of the support carries at least one electrically conducting resistance heating layer (17) and if necessary carries an electrically conducting connecting layer (18) connected therewith, which is applied on the support, wherein the support has a metallic material in the form of a number of metal foils (15) arranged spaced apart from each other preferably by means of a corrugated metal sheet with the formation of the channels, characterised in that
in the electrical connecting region (33) of at least one of the metal foils at least one electrically nonconducting further layer (34) is provided between the catalytically active layer (32) and either the electrically conducting connecting layer (18) or the electrically conducting resistance heating layer (17).

2. A catalyst according to Claim 1, characterised in that at least the one metal foil (15) having the electrically conducting resistance heating layer is arranged so as to be flat.

3. A catalyst according to Claim 2, characterised in that the metal foils are arranged parallel to each other and such are provided with an electrical resistance heating layer (17) and such (14) are provided without this layer.

4. A catalyst according to one of Claims 1 to 3, characterised in that the further layer (34) is arranged between the catalytically active layer (32) and an additional layer (35).

5. A catalyst according to one of Claims 1 to 4, characterised in that the further layer (34) is a layer having particles of ceramic material and/or glass.

6. A catalyst according to one of Claims 1 to 5, characterised in that the additional layer (35) is formed as a frit layer with embedded particles of metal.

7. A catalyst according to one of Claims 4 to 6, characterised in that in the connecting region (33) on the further layer (34) and/or on the additional layer (35) the resistance heating layer (17) or the electrically conducting connecting layer (18), connecting these with each other, is applied.

8. A catalyst according to Claim 7, characterised in that a further catalytically active protective layer (38) is applied onto the electrically conducting resistance heating layer (17).

9. A catalyst according to Claim 7, characterised in that the protective layer is formed as a wash coat, e.g. aluminium oxide with embedded particles of platinum and/or platinum metals and/or is formed as a frit layer.

10. A catalyst according to one of Claims 1 to 9, characterised in that every two metal foils (15), adjacent to each other, are kept spaced apart by a corrugated metal sheet, with a likewise catalytically active surface, with the formation of the plurality of channels (16).

11. A catalyst according to one of Claims 1 to 10, characterised in that the adjacent metal foils (15) are flat and arranged running parallel to each other in a set, wherein the channels (16) extend from the end face on the exhaust gas entry side to the end face on the exhaust gas exit side in the direction of flow of the exhaust gas.

12. A catalyst according to one of Claims 1 to 11, characterised in that the electrical resistance heating layer (17) extends transversely to the direction of flow of the exhaust gas.

13. A catalyst according to one of Claims 1 to 12, characterised in that the electrical resistance heating layer (17) extends only over a partial length of the metal foils (15).

14. A catalyst according to Claim 12 or 13, characterised in that the electrical resistance heating layer (17) is arranged in the region of the end of the metal foil (15) on the exhaust gas entry side.

15. A catalyst according to Claim 12, 13 or 14, characterised in that all layers of the metal foil, with the exception of the catalytically active layer (32), are applied by the screen printing process in the thick layer technique.

16. A catalyst according to Claim 12, 13, 14 or 15, characterised in that only a portion of the metal foils (15) are provided with an electrical resistance heating layer (17) and/or with an electrical connecting layer (18) and are electrically connectable at both sides by means of a connecting member in each case.

17. A catalyst according to one of Claims 1 to 16, characterised in that the electrical resistance heating layer itself forms the electrical connecting layer (18).

18. A catalyst according to Claim 16 or 17, characterised in that the metal foils (15), provided with an electrical resistance heating layer (17), are electrically controllable individually or in groups.

19. A catalyst according to one of Claims 1 to 18, characterised in that the electrical resistance heating layer (17) and/or the electrical connecting layer (18) terminate on the metal foil (15) in two connecting ring layers (19) and that these are applied by thick layer technique on the metal foil (15), which is arranged so as to be flat.

20. A catalyst according to Claim 19, characterised in that a connecting member (21), serving for electrical connection, lies on the connecting ring layers (19) in press contact, if necessary supported on the other side of the metal foil (15) on an abutment (20).

21. A catalyst according to one of Claims 19 to 20, characterised in that each metal foil (15), provided with an electrical resistance heating layer (17) and/or electrical connecting layer (18), has a recess (36) surrounded by the connecting ring layer (19).

22. A catalyst according to Claim 21, characterised in that the recess (24) is penetrated by a pin (22) for alignment and mounting.

23. A catalyst according to Claim 22, characterised in that the connecting member is constructed as an electrically conducting contact ring (21) penetrated by the pin (22).

24. A catalyst according to Claim 20, characterised in that each abutment is constructed as a spacer sleeve (20).

25. A catalyst according to Claim 23, characterised in that the electrically conducting contact ring (21) is connectable to a voltage source by means of a connecting wire (23) which is soldered on, welded on or screwed.

26. A catalyst according to one of Claims 1 to 25, characterised in that the support (13), arranged in the inner housing (11), is constructed with the outer housing (12) as a supplementary set.

27. A catalyst according to one of Claims 1 to 26, characterised in that the support (13) is arranged in a support body (40) arranged inside the inner housing (11).

28. A catalyst according to one of Claims 1 to 27, characterised in that the support (13) is mounted so as to be displaceable in the support body (40) by means of a sliding bearing.

29. A catalyst according to Claim 28, characterised in that the sliding bearing has a bearing body (43) which projects into an opening (44) of the support body (40) and is guided longitudinally therein.

30. A catalyst according to Claim 29, characterised in that the opening (44) is closed by a cap (45) which is connected with the support body (40) so as to be tight with respect to exhaust gas.

31. A catalyst according to Claim 29, characterised in that the bearing body (43) is constructed in a cup shape and has an insert formed by a wire cushion (42).

32. A catalyst according to Claim 22 or 31, characterised in that the wire cushion (42) is constructed in a cup shape and the ends of the pin (22), on the end face, project into the wire cushion (42).

33. A catalyst according to Claim 32, characterised in that the pin (22) carries in each case at its two ends a hexagonal nut serving as transmission member.

34. A catalyst according to one of Claims 1 to 31, characterised in that an electrical connecting wire (23) with a connecting member (30) connecting an electrical external connection (31) is constructed as a spring clip, the spring course of which extends substantially transversely to the longitudinal axis of the pin (22).

## Revendications

1. Catalyseur (10) pour purifier les gaz d'échappement provenant de processus de combustion, de préférence de moteurs à combustion interne, comportant un carter (11, 12) et un support agencé dans celui-ci, présentant de préférence une multitude de canaux (16) qui s'étendent parallèlement les uns aux autres et sont réalisés en nid d'abeilles, le support présentant une couche à effet catalytique vis-à-vis des gaz d'échappement, de préférence du "wash-coat", par exemple de l'oxyde d'aluminium avec inclusion de particules en platine et/ou en métaux du groupe du platine, une zone partielle de la surface du support au moins portant au moins une couche chauffante résistive (17) électriquement conductrice et éventuellement une couche de connexion (18) électriquement conductrice et reliée à celle-ci et déposée sur le support, le support présentant une matière métallique sous forme d'un certain nombre de feuilles métalliques (15) agencées à distance les unes des autres en formant les canaux, de préférence au moyen d'une tôle ondulée, dans lequel est prévu au moins une autre couche (34) non conductrice de l'électricité dans la zone de connexion électrique (33) de l'une au moins des feuilles métalliques, entre la couche à effet catalytique (32) et soit la couche de connexion électriquement conductrice (18), soit la couche chauffante résistive électriquement conductrice (17).

2. Catalyseur selon la revendication 1, caractérisé en ce que l'une au moins des feuilles métalliques (15) présentant la couche chauffante résistive électriquement conductrice est agencée à plat.

3. Catalyseur selon la revendication 2, caractérisé en ce que les feuilles métalliques sont agencées parallèlement les unes aux autres, et en ce qu'il est prévu des feuilles métalliques avec une couche chauffante résistive électrique (17) et des feuilles métalliques (14) dépourvues de cette couche.

4. Catalyseur selon l'une quelconque des revendications 1 à 3, caractérisé en ce que l'autre couche (34) est agencée entre la couche à effet catalytique (32) et une couche supplémentaire (35).

5. Catalyseur selon l'une quelconque des revendications 1 à 4, caractérisé en ce que l'autre couche (34) est une couche présentant des particules en céramique et/ou en verre.

6. Catalyseur selon l'une quelconque des revendications 1 à 5, caractérisé en ce que la couche supplémentaire (35) est réalisée sous forme d'une couche de fritte avec inclusion de particules en métal.

7. Catalyseur selon l'une quelconque des revendications 4 à 6, caractérisé en ce que dans la zone de connexion (33), sur l'autre couche (34) et/ou sur la couche supplémentaire (35), est déposée la couche chauffante résistive (17) ou la couche de connexion (18) électriquement conductrice reliant celles-ci l'une à l'autre.

8. Catalyseur selon la revendication 7, caractérisé en ce qu'une autre couche protectrice à effet catalytique (38) est déposée sur la couche chauffante résistive électriquement conductrice (17).

9. Catalyseur selon la revendication 7, caractérisé en ce que la couche protectrice est réalisée sous forme de "wash-coat", par exemple en oxyde d'aluminium avec inclusion de particules en platine et/ou en métaux du groupe du platine et/ou sous forme d'une couche de fritte.

10. Catalyseur selon l'une quelconque des revendications 1 à 9, caractérisé en ce que respectivement deux feuilles métalliques (15) voisines l'une de l'autre sont maintenues à distance l'une de l'autre par une tôle ondulée présentant également une surface à effet catalytique, en formant la multitude de canaux (16).

11. Catalyseur selon l'une quelconque des revendications 1 à 10, caractérisé en ce que les feuilles métalliques voisines (15) sont agencées à plat et parallèlement les unes aux autres en un empilement, les canaux (16) s'étendant depuis la face frontale côté entrée des gaz d'échappement vers la face frontale côté sortie des gaz d'échappement en direction d'écoulement des gaz d'échappement.

12. Catalyseur selon l'une quelconque des revendications 1 à 11, caractérisé en ce que la couche chauffante résistive électrique (17) s'étend transversalement à la direction d'écoulement des gaz d'échappement.

13. Catalyseur selon l'une quelconque des revendications 1 à 12, caractérisé en ce que la couche chauffante résistive électrique (17) s'étend uniquement sur une longueur partielle des feuilles métalliques (15).

14. Catalyseur selon l'une ou l'autre des revendications 12 et 13, caractérisé en ce que la couche chauffante résistive électrique (17) est agencée dans la région de l'extrémité côté entrée des gaz d'échappement de la feuille métallique (15).

15. Catalyseur selon l'une des revendications 12, 13 ou 14, caractérisé en ce que toutes les couches de la feuille métallique sont déposées par un procédé de sérigraphie selon la technique des couches épaisses, exception faite de la couche à effet catalytique (32).

16. Catalyseur selon l'une des revendications 12, 13, 14 ou 15, caractérisé en ce que seule une partie des feuilles métalliques (15) sont pourvues d'une couche chauffante résistive électrique (17) et/ou d'une couche de connexion électrique (18) et sont susceptibles d'être connectées électriquement aux deux côtés au moyen d'un élément de connexion respectif.

17. Catalyseur selon l'une quelconque des revendications 1 à 16, caractérisé en ce que la couche chauffante résistive électrique forme elle-même la couche de connexion électrique (18).

18. Catalyseur selon l'une ou l'autre des revendications 16 et 17, caractérisé en ce que les feuilles métalliques (15) pourvues d'une couche chauffante résistive électrique (17) sont susceptibles d'être pilotées électriquement individuellement ou par groupe.

19. Catalyseur selon l'une quelconque des revendications 1 à 18, caractérisé en ce que la couche chauffante résistive électrique (17) et/ou la couche de connexion électrique (18) se terminent sur la feuille métallique (15) par deux couches annulaires de connexion (19), et en ce que celles-ci sont déposées selon la technique des couches épaisses sur la feuille métallique agencée à plat.

20. Catalyseur selon la revendication 19, caractérisé en ce qu'un élément de connexion (21) servant à la connexion électrique repose avec contact sous pression sur les couches annulaires de connexion (19), le cas échéant en appui contre l'autre côté de la feuille métallique (15) sur un élément de butée (20).

21. Catalyseur selon l'une ou l'autre des revendications 19 et 20, caractérisé en ce que chaque feuille métallique (15) pourvue d'une couche chauffante résistive électrique (17) et/ou d'une couche de connexion électrique (18) présente un évidement (36) entouré par la couche annulaire de connexion (19).

22. Catalyseur selon la revendication 21, caractérisé en ce que l'évidement (24) est traversé par une tige (22) destinée à l'alignement et au maintien.

23. Catalyseur selon la revendication 22, caractérisé en ce que l'élément de connexion est réalisé sous forme d'un anneau de contact (21) traversé par la tige (22) et conducteur de l'électricité.

24. Catalyseur selon la revendication 20, caractérisé en ce que chaque élément de butée est réalisé sous forme d'une douille d'écartement (20).

25. Catalyseur selon la revendication 23, caractérisé en ce que l'anneau de contact électriquement conducteur (21) est susceptible d'être connecté à une source de tension via un fil de connexion (23) brasé, soudé ou vissé.

26. Catalyseur selon l'une quelconque des revendications 1 à 25, caractérisé en ce que le support (13) agencé dans le carter intérieur (11) est réalisé avec le carter extérieur (12) sous forme d'une unité à monter a posteriori.

27. Catalyseur selon l'une quelconque des revendications 1 à 26, caractérisé en ce que le support (13) est agencé dans un corps de support (40) agencé à l'intérieur du carter intérieur (11).

28. Catalyseur selon l'une quelconque des revendications 1 à 27, caractérisé en ce que le support (13) est monté de façon mobile au moyen d'un palier coulissant dans le corps de support (40).

29. Catalyseur selon la revendication 28, caractérisé en ce que le palier coulissant présente un corps de palier (43) qui pénètre dans un orifice (44) du corps de support (40) et qui est guidé longitudinalement dans celui-ci.

30. Catalyseur selon la revendication 29, caractérisé en ce que l'orifice (44) est refermé par un capuchon (45) re au corps de support (40) lié de façon étanche aux gaz d'échappement.

31. Catalyseur selon la revendication 29, caractérisé en ce que le corps de palier (43) est réalisé en forme de pot et présente un insert formé par un tampon en fils (42).

32. Catalyseur selon l'une ou l'autre des revendications 22 et 31, caractérisé en ce que le tampon en fils (42) est réalisé en forme de pot, et en ce que les extrémités frontales de la tige (22) pénètrent dans le tampon en fils (42).

33. Catalyseur selon la revendication 32, caractérisé en ce que la tige (22) porte à ses deux extrémités un écrou hexagonal respectif servant d'élément de transmission.

34. Catalyseur selon l'une quelconque des revendications 1 à 31, caractérisé en ce qu'un fil de connexion électrique (23) est réalisé avec un élément de connexion (30) reliant une borne électrique extérieure (31) sous forme d'une crosse élastique dont la course élastique s'étend sensiblement transversalement à l'axe longitudinal de la tige (22).
